# EUROPEAN PATENT APPLICATION

(11) **EP 2 700 982 A2**
(43) Date of publication of application: **26.02.2014**
(21) Application number: 13181544.1
(22) Date of filing: 23.08.2013
(51) Int. Cl.: G01V 1/28, G01V 1/42

(54) **PATCH MICROSEISMIC ARRAY AND METHOD**

(30) Priority: 24.08.2012 US 201261692814 P
(71) Applicant: CGG Services SA, 91300 Massy (FR)
(72) Inventor: Rebel, Estelle, 91300 MASSY (FR); Meunier, Julien, 91300 MASSY (FR); Maisons, Christophe, 91300 MASSY (FR)
(74) Representative: Regimbeau

(57) **Abstract**

Device and method for locating a microseismic event taking place in a subsurface of the earth. The method includes receiving a location of a well (122); identifying inaccessible locations for seismic receivers (320) on a surface (301) next to the well (122); distributing patches (310i) of the seismic receivers (320) on the surface (301) above the well (122), and around the inaccessible locations; and recording seismic data with the seismic receivers (320).

## Description

### CROSS-REFERENCE TO RELATED APPLICATIONS

The present application is related to and claims the benefit of priority of U.S. Provisional Application Serial No. 61/692,814, filed on August 24, 2012, having the title "Patch Microseismic Array," and being authored by Rebel et. al., the entire content of which is incorporated herein by reference.

### BACKGROUND

### TECHNICAL FIELD

Embodiments of the subject matter disclosed herein generally relate to methods and systems and, more particularly, to mechanisms and techniques for locating microseismic events underground.

### DISCUSSION OF THE BACKGROUND

Stimulated fracturing operations are intended to increase the productivity of a hydrocarbon reservoir working well. These operations include injecting a high-pressure fluid into a layer of subsoil where the reservoir is located. The injection of the fluid produces micro-fractures in the layer. This technique makes it possible to increase the reservoir's permeability by favoring hydrocarbon circulation via micro-fractures to the well.

However, micro-fractures may be generated not only around the production well, but also far away from it, i.e., in unwanted locations (e.g., close to the water level). Thus, it is important to monitor the micro-fractures to better control the entire process. Micro-fractures of the layers are the source of microseismic events. To determine these microseismic events, geologists or geophysicists conventionally record at the surface waves generated by the micro-fractures. The waves are recorded as a function of time by one or more receivers. The signals recorded by receivers are known as seismic traces. Thus, no active seismic source is used for this situation because the microseismic events themselves are the seismic source.

Because of this, stimulated fracturing operations require continuous reservoir monitoring. Stimulated fracturing operations further require continuous monitoring for determining the progress of the fracturing operation and to stop the operation when fracturing is sufficient.

Traditionally, seismic sensors are deployed in the reservoir's vicinity. The conventional way of determining microseismic events in the explored area is to deploy a few sensors inside observation well(s) and to monitor the fracturing events. Another way is to deploy seismic sensors at or close to the earth surface.

However, known methods do not enable rapid data processing, and are not suitable for real-time subsoil monitoring. Further, if receivers are installed in the injection well, the well tends to vibrate under the injection's effect, which raises the noise level on the receivers positioned there. Also, access to another well is not always possible. Furthermore, known methods do not provide an accurate location of the microseismic event and/or its type.

Other methods require placement of hundreds, if not thousands, of receivers along a regular grid that includes columns and rows intersecting each other at right angles. However, fracturing may be performed next to populated areas, or regions with high noise (e.g., highways) or inaccessible regions (e.g., mountains). Thus, it is a challenge to place large receiver grids in these regions.

Accordingly, it would be desirable to provide systems and methods that avoid the afore-described problems and drawbacks.

### SUMMARY

According to one embodiment, there is a method for monitoring microseismic events taking place in a subsurface, below a surface of the earth. The method includes receiving a location of a well; identifying locations inaccessible to seismic receivers on a surface next to the well; distributing patches of the seismic receivers on the surface next to the well, and around the inaccessible locations; and recording seismic data with the seismic receivers.

According to another embodiment, there is a method for monitoring microseismic events taking place in a subsurface, below a surface of the earth. The method includes receiving a location of a well; identifying inaccessible locations for seismic receivers on a surface next to the well; randomly distributing patches of the seismic receivers on the surface next to the well, and around the inaccessible locations; and recording seismic data with the seismic receivers.

According to still another embodiment, there is a method for monitoring microseismic events taking place in a subsurface, below a surface of the earth. The method includes receiving a location of a well; computing an area to be monitored based on a depth of the well; identifying inaccessible locations on a surface above the well and within the area; distributing patches of seismic receivers on the surface, above the well, around the inaccessible locations and within the area; and recording seismic data with the seismic receivers.

According to yet another embodiment, there is a system for monitoring microseismic events taking place in a subsurface, below a surface of the earth. The system includes an interface configured to receive a location of a well relative to a surface of the earth and also to receive inaccessible locations for seismic receivers on a surface next to the well; a processor connected to the interface and configured to compute, based on a depth of the well, an area to be monitored; patches of the seismic receivers distributed on the surface, next to the well, around the inaccessible locations and within the area; and patch processing devices associated with patches and configured to receive and locally process seismic data recorded by the seismic receivers and to transmit in real-time locally processed seismic data to the processor for processing.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a system for determining a position of a microseismic event;

Figure 2 is a grid of receivers provided on the ground for measuring seismic data;

Figure 3 is a schematic diagram of a system of patches of receivers distributed for determining a microseismic event according to an embodiment;

Figure 4 is a schematic diagram of a patch of receivers according to an embodiment;

Figure 5A illustrates a distribution of patches of receivers relative to a well according to an embodiment;

Figure 5B illustrates the well;

Figure 6 is a flowchart of a method for distributing patches of receivers on a surface according to an embodiment; and

Figure 7 is a schematic diagram of a controller that implements a method for determining a microseismic event.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of microseismic events generated by fracturing. However, the embodiments to be discussed next are not limited to such events but may be applied to other sources of seismic events.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, there is an acquisition geometry for surface microseismic observation to facilitate receiver deployment in sensitive areas, in areas with difficult access and/or in areas with permit restrictions (e.g., areas local or regional authorities to not allow to be subjected to receiver deployment, or areas in which no wireless communications are allowed). Instead of being deployed on a regular grid or on intersecting lines, receivers are deployed in an areal manner in accessible or authorized locations called "patches." A relatively large number of receivers may be located in a patch, leading to a gain in signal-to-noise comparable or exceeding the gain obtained in burying the receivers (shallow buried arrays). An interval between patches may be comparable to the interval between shallow buried arrays. In one application, plural patches are distributed over an area of interest. In another application, plural patches are randomly located in the available area of interest, i.e., there is no correlation between the location of the well (e.g., horizontal well) and the location of the patches. In other words, for this application, patches are not arranged symmetrically around, or at predetermined distances from, the horizontal well.

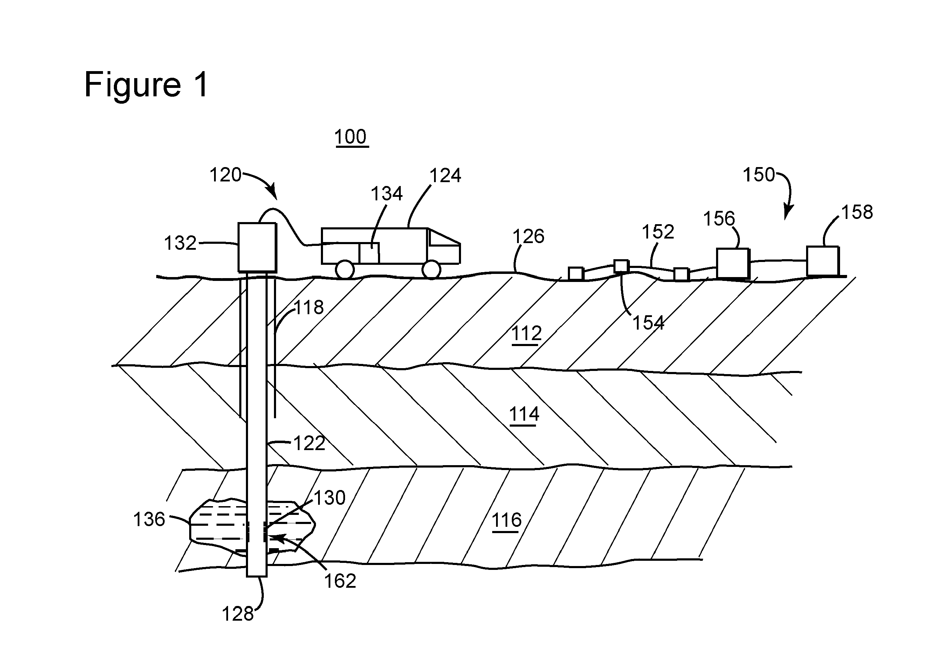

A system 100 for recording and/or determining the positions of microseismic events is illustrated in Figure 1. System 100 is deployed above a subsurface zone of interest that includes geological layers 112, 114, and 116. Layer 116 contains hydrocarbons. A well 118 is drilled through the geological layers to layer 116. System 100 includes a fracturing device 120 and a monitoring device 150. Fracturing device 120 includes a fluid injection column 122 extending into well 118 and a pumping unit 124 positioned on the surface 126 of the subsurface zone. Injection column 122 includes a lower end 128 provided with openings 130 and an upper end 132 connected to pumping unit 124.

Pumping unit 124 includes a pump 134 configured to inject a high-pressure fracturing fluid 136 into layer 116 via injection column 122. The fracturing fluid typically consists of a mixture of a liquid (for example, water) and particles (for example, sand).

The fracturing fluid is discharged from column 122 via openings 130 created by well casing perforations. The fracturing fluid enters subsurface layer 116, inducing fracturing of layer 116, i.e., the appearance of cracks inside layer 116. The particles contained in the fracturing fluid are forced into the cracks and remain in place in the cracks when the fluid pressure is released, thus forming a permeable network enabling hydrocarbon to flow in layer 116 to well 118.

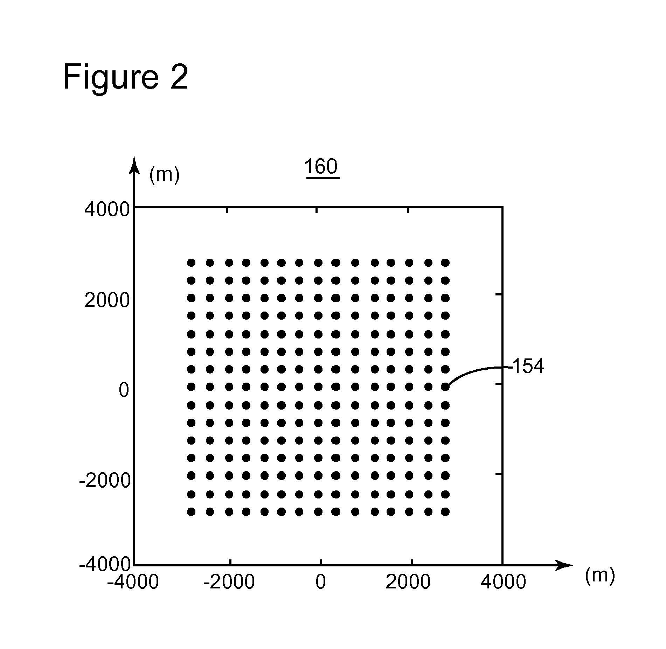

Monitoring device 150 may be separately located from fracturing device 124 or on fracturing device 124. The monitoring device may include a network 152 of receivers (e.g., geophones) 154, a recording unit 156 and a processing unit 158. Receivers 154 are arranged on the soil surface 126 or in the vicinity of this surface. Receivers 154 may be arranged on the nodes of a grid 160 as shown in Figure 2 or may be arranged in any other configuration. Processing unit 158 may be configured to implement any of the methods discussed next.

The soil movements detected by receivers 154 are converted into signals (e.g., electric voltages) and transmitted to recording unit 156 to be recorded therein. The recordings obtained represent the seismic data (or traces). For example, according to an exemplary embodiment, signals s are detected by receivers 154. The signal s is a function of the position r of the receiver and the time t at which it is recorded.

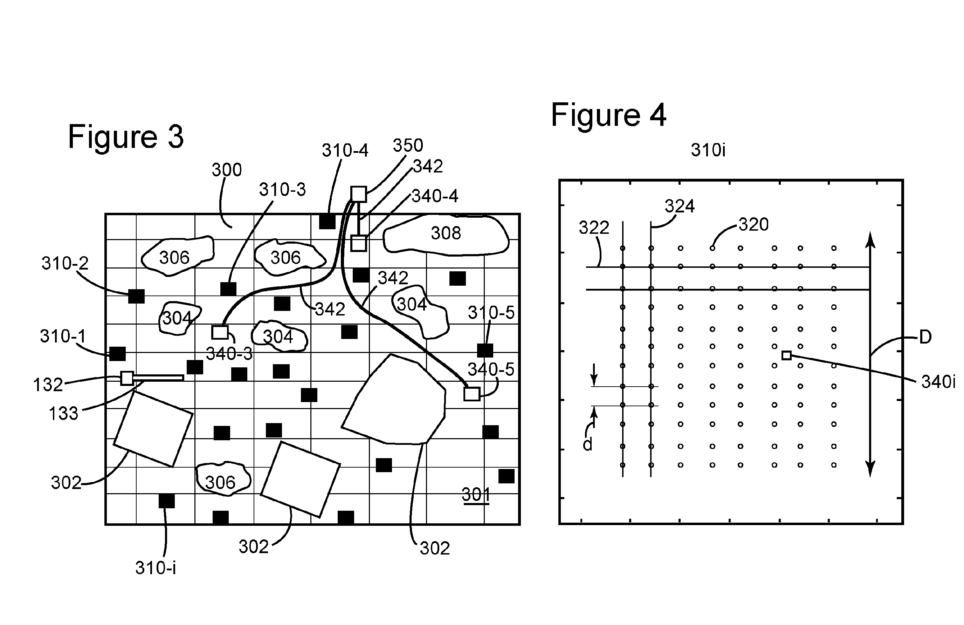

According to an embodiment illustrated in Figure 3, well 118 has not only a vertical component as shown in Figure 1, but also a horizontal component. Figure 3 shows, for simplicity, only upper end 132 of the vertical portion and a horizontal portion 133 of well 118. Figure 3 also shows an area 300 that needs to be seismically surveyed in connection with the fracturing process. Area 300 is located at the surface 301 of the earth and it may include zones 302 for which the surveying company might not have a permit (i.e., no rights) to survey those areas. Area 300 may also include zones 304 which are not appropriate or accessible for distributing/placing the receivers. In addition, area 300 may also include zones 306 that are potential sources of noise, e.g., highways, or zones 308 that host inhabited dwellings. Thus, for practical reasons, receivers cannot be distributed on all these zones 302, 304, 306 and 308.

However, according to an embodiment, the receivers are grouped in patches and placed in areas around zones 302, 304, 306 and 308. A single patch may include a given number of receivers. Figure 3 shows multiple patches 310-i, where "i" varies from 1 to any number. In one application, i is between 10 and 30 patches. A patch 310-i is illustrated in Figure 4 and includes plural receivers 320. A receiver may be a geophone, a hydrophone, an accelerometer or any combination of these sensors or other known seismic sensors. The receiver may be one or three component. Each patch may have a corresponding patch processing device 340-i that may include processing capabilities (e.g., a processor) and also storing capabilities (e.g., a storage device). Patch processing devices 340-3 to 340-5 are shown in Figure 3 as being located outside corresponding patches 310-i. However, in one application, each patch processing device is located within the patch as shown in Figure 4. Patch processing device 340-i may be wired to the receivers or it may communicate in a wireless manner (e.g., short distance wide band radio telemetry) with them. Also, patch processing device 340-i may be configured to communicate with a central unit 350 that collects all the seismic data from all patches. Patch processing devices 340-i may be wired to central unit 350, i.e., using long-distance cable telemetry, e.g., fiber optics 342. Alternatively, or in addition, patch processing devices 340-i may communicate in a wireless manner with central unit 350 or both wireless and wired.

Receivers 320 are intended to be distributed along lines that form a grid having rows 322 and columns 324 as shown in Figure 4. However, sometimes, due to practical considerations, receivers 320 are placed off the rows and/or columns as also illustrated in Figure 4. Figure 4 also shows a possible distance d between the receivers and a size D of the patch.

More specifically, a distance d between consecutive receivers may be the same on the rows and columns. A possible value for the distance d is less than one-half of the minimum wavelength intended to be recorded with the receivers. For example, if the fracturing process (i.e., the seismic target) is about 2,100 m depth, and a maximum value for the recorded frequency is 100 Hz, the minimum wavelength is about 30 m. In this case, d should be equal to or smaller than 15 m. For a depth of 3,600 m and a maximum frequency of 40 Hz, the wavelength is around 60 m and d should be equal to or less than 30 m.

Patch 310-i may be a square having a size D. Size D may be in the range of a couple of maximum wavelengths to be recorded. For example, D may be between 1 and 100 wavelengths. Thus, for the first example discussed above, D is between 30 and 3,000 m, and for the second example discussed above, D is between 60 and 6,000 m. However, more practical ranges are between 1 and 10 wavelengths. In another application, patch 310-i may have a different shape than a square. Thus, the number of receivers in each patch is dictated by the distances D and d.

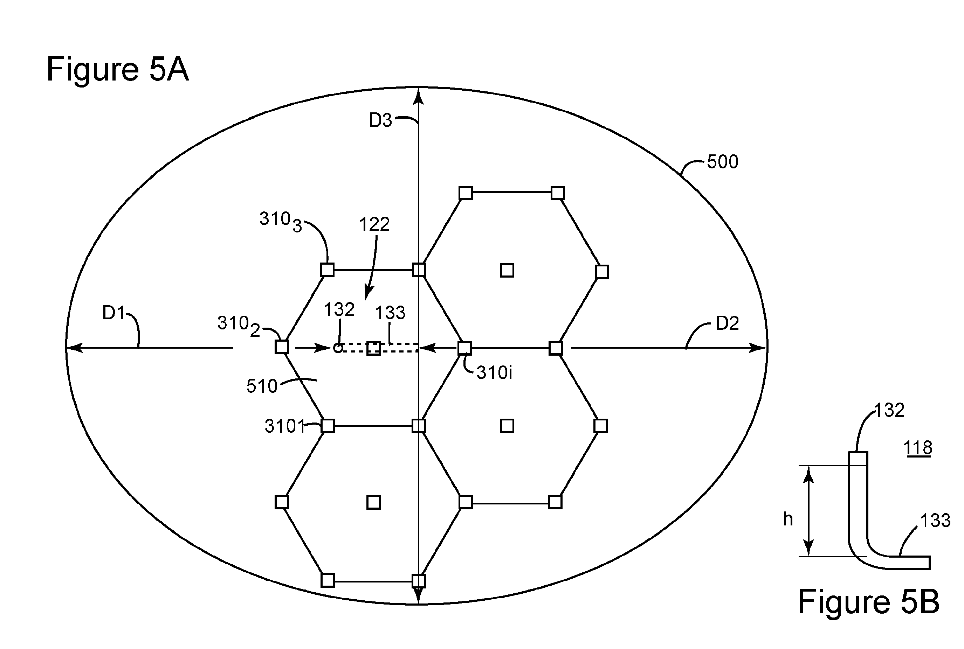

In one embodiment, patches 310-i are distributed based only on practical considerations, i.e., just to avoid zones 302, 304, 306 and 308 without any a priori calculations. In another embodiment, the patches are randomly distributed in the available areas. However, in another embodiment as illustrated in Figure 5A, the location of the patches is determined as follows. Figure 5B shows both the vertical portion and horizontal portion of well 118. A depth h of well 118 is considered to be known. An area 500 around well 118 that is monitored for microseismic events is characterized by distances D1, D2 and D3. Distance D1 is calculated by multiplying the depth h of the well by a number p having a value between 1.5 and 2. D2 is calculated by the same method, i.e., multiplying h with p, and D3 is calculated by multiplying h by a number r, which has a value of around 4. Area 500 may be a circle having a diameter equal to D1 plus D2, or to D3. In one application, area 500 may be a square having a side equal to D1 plus D2, or to D3. In still another application, area 500 may be a rectangle having one side equal to D1 plus D2, and another side equal to D3. Area 500 is then covered with patches 310-i. In one application, area 500 is covered with hexagons 510, and patches 310-i are distributed at the vertices of the hexagons. In another application, each hexagon has another patch located in the center of the hexagon. If any obstacle or non-permit zone is located at the vertices of the hexagon, those corresponding patches can be moved around or skipped.

This is possible because, different from the conventional seismic survey, where the no aliasing constraint cannot be largely exceeded, the microseismic situation is different. More specifically, in microseismic, there is no source deployment because the source of seismic signals is the fracturing process itself. Sampling is performed exclusively by receivers. However, the absence of (spatial) aliasing becomes a much lighter constraint when the general area of microsesimic activity is well defined, as is the case in fracturation monitoring operations. This is because aliasing noise is found far away from the image point. Consequently, it is possible to leave some relatively large "holes" in the acquisition pattern and to run successful operations in these conditions.

Thus, with a patch seismic configuration, the deployment of receivers is aimed at reducing footprint and allowing real-time processing. The sparse distribution of patches is based on small-aperture dense arrays, i.e., size and spacing is based on ground-roll wavelength. Seismic data acquisition may be configured to be performed independently for each patch, i.e., each patch collects its own data and stores and processes it at a patch processing device 340-i associated with the patch. The patches may be GPS synchronized so that data from patches may be combined in a single dataset. Although traces associated with each patch are stored in the patch processing device 340-i, an a priori group stack may be performed for real-time processing, at the patch level. For example, 20 patches (each having 256 geophones, which results in 5,120 geophones) are deployed and their data is recorded for processing. However, in one application, only 20 traces (one trace per patch) are transmitted to central processing device 350 for real-time processing.

For the configuration discussed above, an advantage is that the number of patches and number of geophones are scalable, i.e., depend on target depth and background noise.

Processing collected data may be based on existing surface-based processing techniques, e.g., source-scanning techniques, beam forming detection using master events (per shots) and joint focal mechanism and location. For example, a method for detecting a microseismic event is described in U.S. Patent Publication Application No. 2010/0302905, author J. Meunier, which is assigned to the assignee of this patent application, and which content is incorporated herein by reference in its entirety. Because in one embodiment it is desired to process the data in real time, a problem that needs to be addressed is the difficulty of handling a large volume of data recording by the patches.

A possible way around this difficulty is to use the slant stack technique, presented by Meunier et al. at EAGE Workshop on Passive Seismic, 22-25 March 2009, Limassol, Cyprus, entitled, Detection of Micro-seismic Events Using a Surface Receiver Network*,* the entire content of which is incorporated herein by reference. This technique essentially reduces the data volume to be analyzed in proportion to the ratio between the number of receiver channels and the number of patches.

Another difficulty is to transmit the data in real time from the receivers 320 to central unit 350 for processing. The transmission can be achieved in various manners. For example, it is possible to use cable telemetry. This technique may be used in some of the areas where the patch acquisition is planned. It fully solves the problem, but remains operationally cumbersome in many situations. Another solution is to use full radio telemetry. The application of this technique is often hampered by local regulations, which limit what frequency bandwidth can be used. Still another solution is to use mixed radio and cable telemetry. Short distance transmission is performed between the receivers 320 and corresponding patch processing device 340-i, and long distance cable telemetry 342 is used between patch processing device 340-i and central processing unit 350. The patch geometry can be optimized to minimize cable deployment.

Using short distance, wide band, radio telemetry for the patch processing device 340-i, where an automatic pre-detection routine is run on a local workstation may become adequate for data transmission from each patch processing device to the central station. In one application, cables are used to connect the receivers to the patch processing device. In another application, a combination of cables and radio telemetry is used. However, irrespective of the application, local processing may be implemented at the patch processing device 304-i, i.e., seismic data collected from the receivers is partially processed in the patch processing device and this partially processed data is then sent to the central processing unit. Depending on the size and goals of the survey, any of the steps (e.g., stacking) traditionally performed at the central processing unit may be performed at the patch processing device. In one application, this local processing step reduces the amount of data to be sent to the central processing unit.

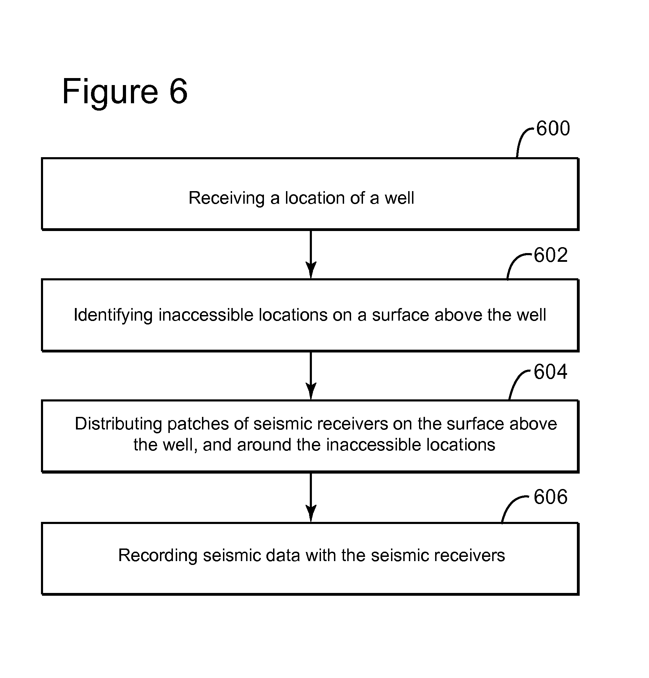

According to an embodiment illustrated in Figure 6, there is a method for monitoring microseismic events taking place in a subsurface, below a surface of the earth. The method includes a step 600 of receiving a location of a well, a step 602 of identifying inaccessible locations on a surface above the well, a step 604 of distributing patches of seismic receivers on the surface above the well and around the inaccessible locations, and a step 606 of recording seismic data with the seismic receivers.

Another method for processing seismic data associated with microseismic events taking place in a subsurface, below a surface of the earth, may include a step of receiving, at plural receivers, the seismic data associated with the microseismic events, sending the seismic data from the plural receivers to a patch processing device, partially processing the seismic data at the patch processing device, sending the partially processed seismic data from the patch processing device to a central processing device, and further processing the partially processed seismic data at the central processing device to generate an image of the subsurface. The seismic data is transmitted between the receivers and the patch processing device and between the patch processing device and the central processing device by one of the following paths: wireless, wired, and a combination of wired and wireless. The step of partially processing the seismic data may include a step of pre-processing the seismic data, e.g., denoising, a step of applying time-shifts, a summation step, etc.

An area on which the receivers are distributed may be computed as now discussed. A depth of a well is multiplied with a number p to obtain a first distance D1; the depth of the well is also multiplied with a number r to obtain a second distance D2. A circle having a diameter equal to twice D1 or equal to D2 is generated and this circle is the area in which the receivers are to be distributed. For this area, p is 2 or smaller and r is 4 or smaller. Instead of a circle, a square having a side equal to twice D1 or D2 may be generated, where p is 2 or smaller and r is 4 or smaller. In another application, a rectangle may be generated having a first side equal to twice D1 and a second side equal to D2, with p being 2 or smaller and r being 4 or smaller. In still another application, the patches are distributed at vertices of hexagons covering the area and/or additional patches are distributed at centers of the hexagons.

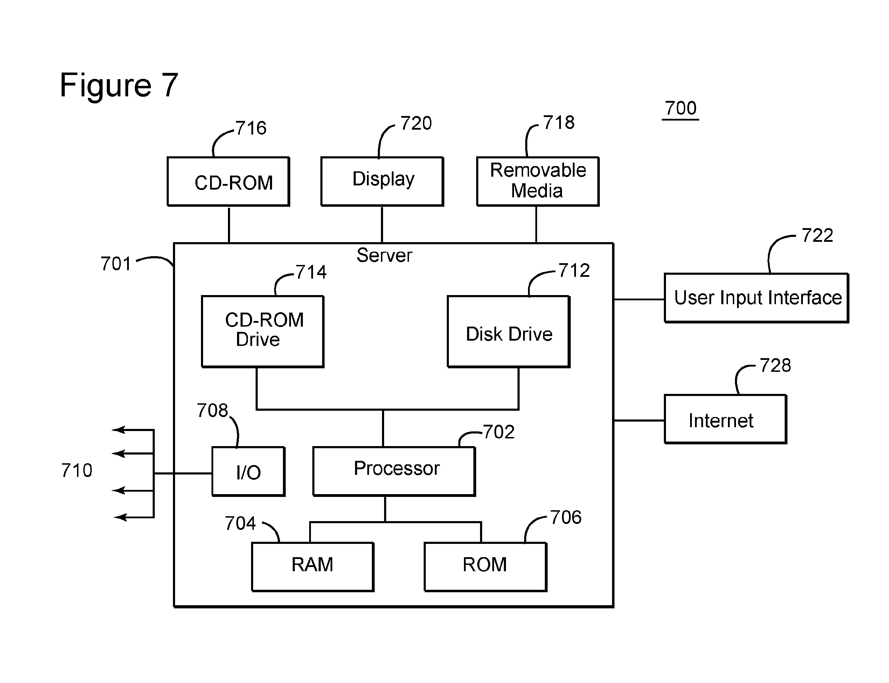

The methods discussed above may be implemented in dedicated devices (e.g., dedicated networks or computers or cloud computing networks, etc.) for being performed. A combination of software and hardware may be used to implement the above-described methods. A dedicated machine that can implement one or more of the above-discussed exemplary embodiments is now discussed with reference to Figure 7.

An exemplary computing arrangement 700 suitable for performing the activities described in the exemplary embodiments may include server 701. Such a server 701 may include a central processor (CPU) 702 coupled to a random access memory (RAM) 704 and to a read-only memory (ROM) 706. ROM 706 may also be other types of storage media to store programs, such as programmable ROM (PROM), erasable PROM (EPROM), etc. Processor 702 may communicate with other internal and external components through input/output (I/O) circuitry 708 and bussing 710, to provide control signals and the like. Processor 702 carries out a variety of functions as is known in the art, as dictated by software and/or firmware instructions.

Server 701 may also include one or more data storage devices, including hard disk drives 712, CD-ROM drives 714, and other hardware capable of reading and/or storing information such as DVD, etc. In one embodiment, software for carrying out the above-discussed steps may be stored and distributed on a CD-ROM 716, diskette 718 or other form of media capable of portably storing information. These storage media may be inserted into, and read by, devices such as CD-ROM drive 714, disk drive 712, etc. Server 701 may be coupled to a display 720, which may be any type of known display or presentation screen, such as LCD, plasma display, cathode ray tubes (CRT), etc. A user input interface 722 is provided, including one or more user interface mechanisms such as a mouse, keyboard, microphone, touch pad, touch screen, voice-recognition system, etc.

Server 701 may be coupled to other computing devices, such as the landline and/or wireless terminals via a network. The server may be part of a larger network configuration as in a global area network (GAN) such as the Internet 728, which allows ultimate connection to the various landline and/or mobile clients.

As also will be appreciated by one skilled in the art, the exemplary embodiments may be embodied in a wireless communication device, a computer network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized, including hard disks, CD-ROMs, digital versatile disc (DVD), optical storage devices, or magnetic storage devices such a floppy disk or magnetic tape. Other non-limiting examples of computer-readable media include flash-type memories or other known memories.

The disclosed exemplary embodiments provide a system and a method for using patches of receivers in microseismic detection. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for monitoring microseismic events taking place in a subsurface, below a surface of the earth, the method comprising:
receiving a location of a well (122);
identifying locations inaccessible to seismic receivers (320) on a surface (301) next to the well (122);
distributing patches (310i) of the seismic receivers (320) on the surface (301) next to the well (122), and around the inaccessible locations; and
recording seismic data with the seismic receivers (320).

2. The method of Claim 1, further comprising:
computing an area (500) on the surface (301) based on a depth of the well; and
distributing the patches inside the area (500).

3. The method of Claim 2, wherein the patches are distributed randomly within the area.

4. The method of Claim 2, wherein the patches are distributed at vertices of hexagons covering the area.

5. The method of Claim 1, further comprising:
transmitting the seismic data from the seismic receivers to a patch control unit; and
locally processing the seismic data at the patch control unit.

6. The method of Claim 5, wherein the seismic data is wirelessly transmitted from the seismic receivers to the patch control unit.

7. The method of Claim 5, wherein the seismic data is transmitted from the seismic receivers to the patch control unit in wired and wireless modes.

8. The method of Claim 5, further comprising:
transmitting locally processed seismic data from the patch control unit to a central processing unit; and
further processing the locally processed seismic data to obtain an image of the subsurface.

9. The method of Claim 8, wherein the seismic data is transmitted from the patch control unit to the central processing unit in a wired manner.

10. The method of Claim 1, wherein the inaccessible locations include locations for which an operator of the seismic survey has no permits, locations where there are dwellings or locations having obstacles that prevent receiver distribution.

11. The method of Claim 1, wherein the well has a horizontal component.

12. The method of Claim 1, further comprising:
recording plural traces with the seismic receivers of a patch;
wirelessly transmitting the plural traces to a patch control unit; and
transmitting the plural traces from the patch control unit to a general control unit through a wire.

13. A method for monitoring microseismic events taking place in a subsurface, below a surface of the earth, the method comprising:
receiving a location of a well (122);
identifying inaccessible locations for seismic receivers (320) on a surface (301) next to the well (122);
randomly distributing patches (310i) of the seismic receivers (320) on the surface (301) next to the well (122), and around the inaccessible locations; and
recording seismic data with the seismic receivers (320).

14. A method for monitoring microseismic events taking place in a subsurface, below a surface of the earth, the method comprising:
receiving a location of a well (122);
computing an area (500) to be monitored based on a depth of the well (122);
identifying inaccessible locations on a surface (301) above the well (122) and within the area (500);
distributing patches (310i) of seismic receivers (320) on the surface (301), above the well (122), around the inaccessible locations and within the area (500); and
recording seismic data with the seismic receivers (320).

15. A system for monitoring microseismic events taking place in a subsurface, below a surface of the earth, the system comprising:
an interface (708) configured to receive a location of a well (122) relative to a surface (301) of the earth and also to receive inaccessible locations for seismic receivers (320) on a surface (301) next to the well (122);
a processor (702) connected to the interface (708) and configured to compute, based on a depth of the well (122), an area (500) to be monitored;
patches (310i) of the seismic receivers (320) distributed on the surface (301), next to the well (122), around the inaccessible locations and within the area (500); and
patch processing devices (340i) associated with patches (310i) and configured to receive and locally process seismic data recorded by the seismic receivers (320) and to transmit in real-time locally processed seismic data to the processor for processing.
